# EUROPEAN PATENT APPLICATION

(11) **EP 2 079 254 A1**
(43) Date of publication of application: **15.07.2009**
(21) Application number: 08300029.9
(22) Date of filing: 14.01.2008
(51) Int. Cl.: H04W 4/00

(54) **Multi-mode traffic engineered handover management device and method for a broadband wireless access network**

(71) Applicant: Alcatel Lucent, 75008 Paris (FR)
(72) Inventor: Randriamasy, Sabine, 92190, MEUDON (FR); Capdevielle, Véronique, 78114, MAGNY LES HAMEAUX (FR)
(74) Representative: Sciaux, Edmond

(57) **Abstract**

A handover management device (D1) is intended for a broadband wireless access network (AN) comprising a plurality of base stations (BS1-BS6) to which communication equipments (CE1-CE7) may be connected to. This device (D1) is arranged, when it receives, from either a base station (BS1) or a communication equipment (CE2) connected to this base station (BSi), an alarm message signalling either i) a degradation of at least one decision metric, representative either of the quality of a signal transmitted between this connected communication equipment (CE2) and this base station (BS1) or of a quality of service offered by this base station (BS1) to this connected communication equipment (CE2), or ii) an overload of this base station (BS1), for triggering a handover assisted either by this connected communication equipment (CE2) and possibly this base station (BS1) and involving a target base station (BS2) to be selected, or by a selected target communication equipment (CE5) and this base station (BS1) and involving a target base station (BS2) to be selected.

## Description

The present invention relates to broadband wireless access networks, and more particularly to handover (or "HO") management in such access networks.

The traffic transported by broadband wireless communication networks is often bursty and QoS ("quality of service") demanding, mainly in terms of bandwidth, delay and/or losses. So, the radio access networks of these networks are more and more subject to shortages and imbalance in resource usage, so that it becomes very important to manage precisely the handovers of the communication equipments between the base stations of the radio access networks.

It is recalled that handovers are mainly used by a wireless network during mobility of the communication equipments that are connected to its base stations (or BSs) in order to maintain the service continuity.

Several solutions have been proposed to manage the handovers.

A first solution, defined by the WiMAX standard 802.16(e), consists in considering QoS and signal fading handover situations, which are initiated either by a communication equipment or by a base station to which a communication equipment is connected to and for which the ultimate handover decision belongs to this communication equipment. The main drawback of this first solution resides in the fact that there is no control provided on the handover decision, i.e. the handover request notification is optional as well as the follow-up of the set of candidate base stations. Moreover, the algorithm producing the handover decision is beyond the scope of the WiMAX standard 802.16(e).

A second solution, defined by the WiMAX Forum (NWG Stage 3), consists in controlling the handovers that are assisted by the communication equipments (or "MS assisted HO"). The main drawback of this second solution resides in the fact that there is no control of the handovers that are assisted by the base stations (or "BS assisted HO"), whereas cell overload and QoS degradation are mainly sensed at the base station level.

A third solution, defined in the document "QoS management by selective handoff" of G. Sridhar and V. Sridhar, in Proceedings Wireless Networks and Emerging Technologies, WNET 2004, consists in delaying or hastening the handovers (or handoffs) of a base station with an objective of using effectively its available resources and the available resources of the neighbouring (or adjacent) base stations. This is supposed to maintain the service continuity in terms of QoS during mobility.

More precisely, when the load of a base station exceeds a chosen threshold, a service request received by the CAC ("Call Admission Control") is processed together with the decision on whether some handover must be delayed or hastened.

An anticipated handover is decided when a request for a new subscriber or an additional service arises and when the load of the serving base station exceeds a chosen threshold. If a handover possibility exists, a selected (mobile) communication equipment, located in the part of the coverage zone of its serving base station that is common with the one of an adjacent base station, is handed over to this adjacent base station in order to accept the service request. The selection of the (mobile) communication equipment considers its connection time to its serving base station and the signal strength and maximizes the used bandwidth. The base station selection is based on the base station load, the average load of the adjacent base stations BS and the signal strength.

A delayed handover is decided when a communication equipment is connected to a first base station and a second base station requests to service it. If the communication equipment is still in the communication range of the first base station and the load of the first base station is below an admissible threshold, then the handover is refused and the connection of the communication equipment is kept with the first base station for load balancing purposes.

The main drawback of this third solution resides in the fact that a handover is triggered at the CAC level, once a request arises, so that the handover investigation is time consuming and may be unsuccessful. Moreover, the above mentioned document does not provide a clear explanation on how the candidate communication equipments are ordered and chosen, and how the target base station is selected, whereas the selection method is fundamental. Last, the handover triggering mechanism is resource-aware in order to optimize the CAC success rate, but it does not directly consider the QoS.

So, the object of this invention is to improve the situation, and more precisely to manage the handovers of communication equipments that may be moving or not, provided they get the appropriate functions to allow them to be handed over in order to maintain the service continuity and/or the QoS continuity and/or the load balancing to maximize the success of the maintenance of the service continuity and/or the QoS continuity.

For this purpose, it provides a handover management device, for a broadband wireless access network comprising a plurality of base stations to which communication equipments (or stations) may be connected.

This device is characterized in that it is arranged, when it receives, from either a base station or a communication equipment connected to this base station, an alarm message signalling either i) a degradation of at least one decision metric, representative either of the quality of the signal that is transmitted between this connected communication equipment and this base station or of a quality of service that is offered by this base station to this connected communication equipment, or ii) an overload of this base station, or triggering a handover assisted either by this connected communication equipment and possibly this base station and involving a target base station to be selected, or by a selected target communication equipment and this base station and involving a target base station to be selected.

A specific handover (HO) step sequencing is defined and associated to each type of alarm message. So, the invention defines specific information that is collected and used by the device. For instance, if the alarm message directs to a QoS HO triggering mode, the device uses specific information on the QoS requested and offered to a communication equipment that it has previously collected. If the alarm message directs to a load balancing HO triggering mode, the device uses specific information including the data delivery services and the scheduling services used for the connected communication equipment that it has previously collected. This specific information is used besides other information reflecting the quality of the data delivery and the load in the concerned access network.

The device according to the invention may include additional characteristics considered separately or combined, and notably:
- each decision metric may be chosen from a metric group comprising at least the channel to interference noise ratio (CINR), the received signal strength indicator (RSSI), the quality of service ratio that is provided to service flow(s) attached to a communication equipment, the base station load and the available bandwidth;
- it may be arranged, when it receives an alarm message signalling a degradation of at least one decision metric from the base station or the connected communication equipment, to generate a response message comprising a filtered list of at least one base station selected according to at least one constraint on at least one metric, and to transmit this response message to this connected communication equipment that is concerned by the received alarm message so that it selects at least one target base station into this filtered list according to at least one selection criterion;
- it may be arranged, when it receives an alarm message signalling an overload from the base station, to select a target communication equipment among an equipment group of communication equipments that are located in base station coverage zones that are overlapping each other, and to transmit a message comprising a filtered list of at least one base station (selected according to at least one constraint on at least one metric) to this target communication equipment so that it selects at least one target base station into this filtered list according to at least one selection criterion;
   ➢ the equipment group may comprise communication equipments that may be moving or not, provided they get the appropriate functions to allow them to be handed over;
- it may be arranged to get a filtered list of selected base stations from the base station that has sent the received alarm message or that is connected to the communication equipment that has generated the received alarm message;
- at least one of the selection criteria may be weighted by an associated weight;
- each selection criterion and/or selection constraint may concern a selection metric chosen from a metric group comprising at least the channel to interference noise ratio (CINR), the received signal strength indicator (RSSI), the quality of service ratio that is provided to service flow(s) attached to a communication equipment, the base station load and the available bandwidth;

The invention also provides a base station, for a broadband wireless access network, and comprising a handover management device such as the one above introduced.

The invention also provides a handover management method for a broadband wireless access network comprising a plurality of base stations to which communication equipments may be connected to.

This method is characterized in that it consists, upon reception, from either a base station or a communication equipment connected to this base station, of an alarm message signalling either i) a degradation of at least one decision metric, representative either of the quality of a signal transmitted between this connected communication equipment and this base station or of a quality of service offered by this base station to this connected communication equipment, or ii) an overload of this base station, in triggering a handover assisted either by this connected communication equipment and possibly this base station and involving a target base station to be selected, or by a selected target communication equipment and this base station and involving a target base station to be selected.

The method according to the invention may include additional characteristics considered separately or combined, and notably :
- upon reception of an alarm message signalling a degradation of at least one decision metric from the base station or the connected communication equipment, one may generate a response message comprising a filtered list of at least one base station selected according to at least one constraint on at least one metric, and one may transmit this response message to this connected communication equipment that is concerned by the received alarm message so that it selects at least one target base station into the filtered list according to at least one selection criterion;
- when one receives an alarm message signalling an overload from the base station, one may select a target communication equipment among an equipment group of communication equipments that are located in base station coverage zones that are overlapping each other, and one may transmit a message comprising a filtered list of at least one base station (selected according to at least one constraint on at least one metric) to this target communication equipment so that it selects at least one target base station into this filtered list according to at least one selection criterion;
   ➢ the equipment group may comprise communication equipments that may be moving or not, provided they get the appropriate functions to allow them to be handed over;
- one may get a filtered list of selected base stations from the base station that has sent the received alarm message or that is connected to the communication equipment that has generated the received alarm message;
   ➢ the filtered list may be determined by the base station before the reception of the alarm message;
- at least one of the selection criteria may be weighted by an associated weight;
- each selection criterion and/or selection constraint may concern a selection metric chosen from a metric group comprising at least CINR, RSSI, the quality of service ratio that is provided to service flow(s) attached to a communication equipment, the base station load and the available bandwidth.

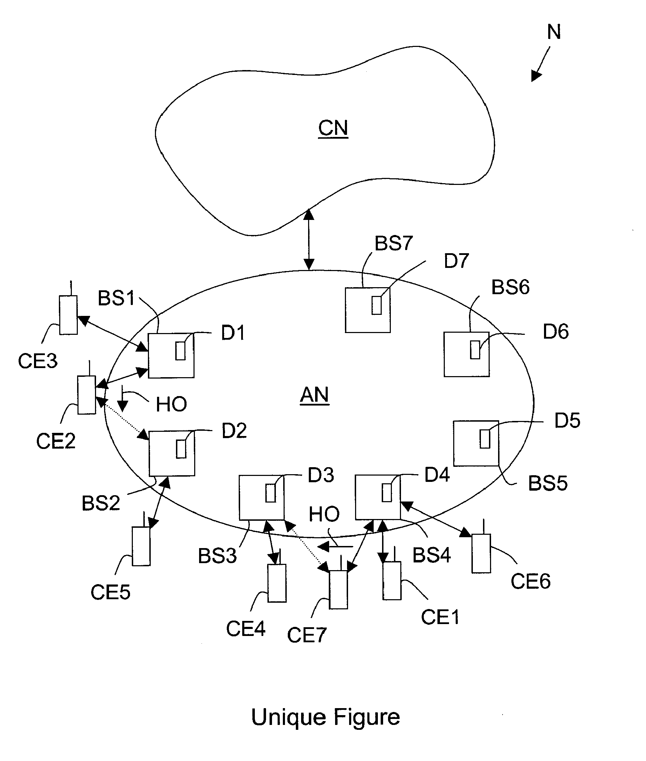

Other features and advantages of the invention will become apparent on examining the detailed specifications hereafter and the appended drawing, wherein the unique figure schematically illustrates an example of broadband wireless communication network comprising base stations provided with a handover management device according to the invention.

The appended drawing may not only serve to complete the invention, but also to contribute to its definition, if need be.

The invention aims at allowing a broadband wireless access network to manage the handovers of the communication equipments that are connected to its base stations.

In the following description it will be considered that the broadband wireless access network (N) is a WiMAX access network (standards IEEE 802.16 and HiperMan, notably). But the invention is not limited to this type of access network. Indeed, it concerns any broadband wireless access network, and notably the ones of cellular (or mobile) networks, such as GSM, GPRS/EDGE, UMTS or CDMA (2000), and the ones of Wireless Local Area Networks (or WLANs).

Moreover, in the following description it will be considered that the communication equipments (CEj) are cellular terminals. But the invention is not limited to this type of (wireless) communication equipment. Indeed, it concerns any type of wireless equipment (or terminal), static or moving, provided it is capable of getting appropriate functions to allow it to be handed over from one base station BSi to another one BSi', and capable of being connected to a broadband wireless communication network in order to exchange data with another communication equipment or network equipment. So, it may be also a cellular phone, a portable computer or a personal digital assistant (PDA), as long as it is equipped with a communication module connectable to a broadband wireless communication network.

As schematically illustrated in the unique figure, a WiMAX network N comprises at least one broadband wireless access network AN (usually named ASN (« Access Service Network »)) and a core network CN connected to its radio access network(s) AN.

Each broadband wireless access network AN comprises several base stations (or access points) BSi (i ≥2) to which communication equipments CEj (j ≥1) may be connected to.

In the non limiting example of embodiment illustrated in the unique figure, each base station BSi (here, i = 1 to 7) comprises a handover management device Di according to the invention. But, in a variant each base station BSi may be connected to a handover management device D according to the invention. In another variant, several base stations BSi could be coupled to a centralized handover management device according to the invention (which may be localized in a centralized network element or equipment or which may comprise modules localized in a centralized network element or equipment and modules distributed in the base stations BSi)

It is important to note that the following detailed description focuses on a de-centralized deployment case, where each base station (BSi) hosts its own device Di according to the invention. But the invention is not limited to this de-centralized deployment case. Indeed it also concerns a centralized deployment case, where all the base stations are coupled to the same device (D) according to the invention.

A (handover management) device Di according to the invention defines a traffic engineered handover manager. It intervenes each time it receives an alarm message (or request) signalling:
- a degradation of at least one decision metric, representative either of the quality of a signal transmitted between a connected communication equipment CEj (here, j = 1 to 7) and the hosting base station BSi (of device Di) or of a quality of service (QoS) offered by the hosting base station BSi (of device Di) to a connected communication equipment CEj, or
- an overload of the hosting base station BSi (of device Di).

It is important to note that a device Di receives the above mentioned alarm messages (or requests) from either a connected communication equipment CEj or the base station BSi which comprises it or to which it is connected (or coupled) to.

It is also important to note that the alarm message that is received by a device Di may contain the value of one or more decision metrics, or it may indicate simply that the value of at least one decision metric is lower than or greater than a chosen threshold or that the load (decision metric) of the base station BSi exceeds a chosen threshold.

It is also important to note that when the decision metric is the signal quality, the alarm message, received by a device Di via its hosting base station BSi, is generated by the connected communication equipment that is experiencing the signal degradation.

For instance a decision metric representative of the signal quality may be the channel to interference noise ratio (CINR) or the received signal strength indicator (RSSI).

For instance a decision metric representative of the QoS may be the QoS ratio (or rate) that is provided to the service flow(s) attached to a connected communication equipment CEj. It is recalled that the QoS ratio (or rate) is the ratio of the QoS that is granted by the hosting base station BSi to the set of service flows of a connected communication equipment CEj with respect to the required QoS that is predefined for this set.

For instance a decision metric representative of the load of a hosting base station BSi may be the load itself and/or the available bandwidth of this base station BSi.

An intervention of a device Di consists in triggering a handover (HO) assisted by:
- a connected communication equipment CEj and possibly the hosting (and serving) base station BSi to which this communication equipment CEj is connected, and involving a target base station BSi' (i' ≠i) to be selected, or
- a selected target communication equipment CEj' (j" ≠j) and the hosting (and serving) base station BSi, and involving a selected target base station BSi'.

So, a device Di manages three different types of handover corresponding to three different triggering modes:
- a "signal triggering mode" which occurs when it receives, from a connected communication equipment CEj, an alarm message defining an alarm on signal quality degradation on the link between this connected communication equipment CEj and its serving (and hosting) base station BSi. This mode triggers a communication equipment assisted handover, which involves a target base station BSi' that is selected according to at least one criterion (and preferably a criterion relative to the signal quality);
- a "QoS triggering mode" which occurs when it receives, from its hosting base station BSi, an alarm message defining an alarm on QoS degradation for one of the communication equipments CEj that are serviced by the hosting base station BSi. Such an alarm message indicates that the QoS rate is below a chosen critical QoS rate threshold. This mode triggers a base station (BSi) and communication equipment (CEj) assisted handover, which involves a target base station BSi' that is selected according to at least one criterion (and preferably a criterion relative to the QoS that is provided to the communication equipment CEj);
- a "Load Balancing (LB) triggering mode" occurs when it receives, from its hosting base station BSi, an alarm message defining an alarm on its load. Such an alarm message indicates that the load of its hosting base station BSi exceeds a chosen critical load threshold. This mode triggers a base station (BSi) and target communication equipment (CEj) assisted handover, which involves a target base station BSi' that is selected according to at least one criterion (and preferably a criterion relative to its load) and the target communication equipment CEj that is the communication equipment (selected according to at least one criterion) to be handed over to the target base station BSi' to anticipate cell congestion.

The above mentioned (decision) metrics may be also both used in criteria and in constraints for the target base station selection.

Each above mentioned mode implies a particular and specific HO management protocol and is characterized by attributes such as the (network) equipment (BSi or CEj) that sends the alarm message, the (network) equipment (CEj and possibly BSi) that assists the HO, the metric(s) used for filtering the candidate base stations BSi' prior to the target base station selection (or scanning), and the metric(s) used for the target base station selection (or scanning).

The above mentioned target base station selection can be performed in two steps.

In a first step the device Di can get a filtered list of at least one candidate selected base station BSi' from the base station BSi that has generated and sent an alarm message it has received or that is connected to the communication equipment CEj that has generated and sent an alarm message it has received. For this purpose the hosting base station BSi gets the values of the metric(s) and/or indicator(s) representative of the signal quality and/or the QoS on the links between the communication equipments CEj and the adjacent base stations BSi'. The hosting base station BSi preferably also gets the load of the adjacent base stations BSi' in order to reject the ones that are excessively loaded. Then it filters candidate base stations BSi' according to at least one constraint on at least one metric. Then it generates a message designating the filtered (or selected) candidate base stations BSi' (defining a filtered list) and "transmits" this filtered list in a message to the device Di.

The filtered list of candidate adjacent base stations BSi' is preferably generated prior to the scanning of adjacent base stations BSi' by the communication equipment CEj likely to experience a handover in order to save time and resources.

For instance in the case of a WiMAX network, a filtered list of candidates may be attached to (or integrated into) messages such as MOB_BSHO-REQ or MOB_SCN-RSP.

The selection metric(s) that is (are) used for filtering the candidate base stations can be identical to the decision metrics that are used by the device Di to trigger one of the three above mentioned types of handover. So, it can be CINR, RSSI, the QoS ratio, the base station load or the available bandwidth.

For instance the base station BSi may compare the value of each selection metric with a corresponding chosen threshold(s).

For instance, whatever the triggering mode the base station BSi may filter the adjacent base stations BSi' that are not critically loaded (i.e. whose load does not exceed a chosen threshold or whose available bandwidth is greater than a chosen threshold).

In a second step at least a target base station BSi' must be selected into the filtered list of candidate base station(s) BSi' provided by a base station BSi to the device Di.

If the triggering mode is the signal triggering mode or the QoS triggering mode, the device Di generates a response message comprising the filtered list of candidate base station(s) BSi' provided by its hosting base station BSi and transmits this response message to the communication equipment CEj that is concerned by the received alarm message and which is connected to its hosting base station BSi, in order it selects at least one target base station BSi' into the filtered list according to at least one selection criterion.

For this selection the communication equipment CEj first scans the link(s) it may have with the candidate base station(s) BSi' designated into the received filtered list, to get value(s) of metric(s) and/or indicator(s) that are representative of the signal quality and/or the QoS on these link(s), and then it analyzes these values. Then it selects a list of candidate base station(s) BSi' (named target base stations) according to at least one selection criterion, in order to be handed off from its serving base station BSi to one of these target base stations BSi'. In a WiMAX network, the list of candidate base stations BSi' is ranked by the hosting and serving base station BSi, then the final selection of the target base station is done by either the serving and hosting base station BSi with the relay of the Application Service Network GateWay (ASN-GW), or by the ASN-GW in the case of a centralized deployment of the device D. Ranking and final election are performed according to at least a criterion of signal quality and may also involve at least one additional criterion such as the QoS rate and the bandwidth available at the candidate target base stations.

If the triggering mode is the load balancing triggering mode, a target communication equipment CEj' and a target base station BSi' have to be selected.

For this purpose, the device proceeds first to the selection of the target communication equipment CEj' in an equipment group of at least one candidate communication equipment(s) CEj. For instance, this equipment group comprises communication equipments CEj that are located in base station coverage zones that are overlapping each other. Such an eligible equipment group may be moving or not provided it is equipped with the appropriate functions to allow it to be handed over. Slow moving or not moving eligible communication equipments CEj, also referred to as static eligible communication equipments, are considered as offering interesting characteristics allowing them to be handed over.

Then the device Di generates a message comprising the filtered list of candidate base station(s) BSi' provided by its hosting base station BSi and transmits this message to the target communication equipment CEj it has just selected, in order it selects at least one target base station BSi' into the filtered list according to at least one selection criterion.

As mentioned before, for this selection the communication equipment CEj first scans the link(s) it may have with the candidate base station(s) BSi' designated into the received filtered list, to get value(s) of metric(s) and/or indicator(s) that are representative of the signal quality and/or the QoS provided by the candidate base station to the previously selected target communication equipment CEj that is to be handed over to these candidate base station(s). The analysis preferably also involves the updated available bandwidth and/or load of the candidates. In a WiMAX network, the final selection of the target base station is done by either the serving and hosting base station BSi with the relay of the Application Service Network GateWay (ASN-GW), or by the ASN-GW in the case of a centralized deployment of the device D. Ranking and final election are performed according to at least a criterion of signal quality and may also involve at least one additional criterion such as the QoS rate and the bandwidth available at the candidate target base stations.

In a WiMAX network, the communication equipments CEj located in coverage zones that are overlapping each other cannot be identified straightforwardly (unlike UMTS). The present invention attempts to identify an "over-set" of them without scanning, at least by relying on the assumption that such communication equipments CEj are far from their serving base station and therefore get the less productive modulation (QPSK for instance). Static eligible communication equipments CEj may be identified by means of specific "mobility" counters controlled by the network management which is associated to the handover monitoring and can be, for instance, located in each base station BSi. These mobility counters may for instance track the number of signal triggered handover requested by each communication equipment CEj. The analysis of the variations of the values of the mobility counters over a time period allow to detect and classify the communication equipments CEj that reside in a base station coverage area permanently (fixed communication equipments), periodically ("commuting" nomadic communication equipments), or irregularly (nomadic communication equipments). Filtering rules may allow to quickly eliminate the "furtive" mobile communication equipments. Static communication equipments are particularly interesting for load balancing due to their higher stability in location and often in resource requirements.

Whatever the triggering mode, each target selection criterion (used by a communication equipment CEj or a device Di) may concern a selection metric that is chosen among (at least) CINR, RSSI, the QoS ratio that is provided to its service flow(s), the base station load and the available bandwidth.

For instance in the signal triggering mode a (the) main target selection criterion may be relative to the signal quality. The signal quality may be also used as a constraint. Moreover the QoS and/or the load may be also used as auxiliary constraint(s).

For instance in the QoS triggering mode a (the) main selection criterion may be relative to the QoS that is provided to the concerned communication equipment CEj. The QoS may be also used as a constraint. Moreover the signal quality and/or the load may be also used as auxiliary constraint(s).

For instance in the load balancing triggering mode a (the) main selection criterion may be relative to the load (or available bandwidth) of the candidate base stations BSi'. Moreover the signal quality and/or the QoS may be also used as auxiliary constraint(s). Furthermore the main target selection criterion may be also combined with another auxiliary target selection criterion relative to the signal quality. So, a load balancing handover can be triggered by a device Di when the load of a base station BSi exceeds a threshold that is, for instance, below its total capacity plus a preservation factor and plus a best effort traffic ratio. This allows to prevent congestions as well as to augment the success rate of handovers and QoS based CAC.

It is important to note that at least one of the selection criteria (or more precisely the selection metric it concerns) may be weighted by an associated weight which may vary from a triggering mode to the other. For instance, the weight value of CINR or RSSI may be at least equal to 50% in the signal triggering mode, the weight value of the base station load may be at least equal to 50% in the load balancing triggering mode, and the weight value of the QoS rate provided by a base station may be at least equal to 50% in the QoS triggering mode.

Preferably, each time a device Di receives a (triggering) alarm message (which constitutes a kind of handover request) from its hosting base station BSi or a communication equipment CEj, it notifies its handover decision to its hosting base station BSi.

By definition, a base station BSi can view its service distribution (in terms of resources, data delivery services and uplink scheduling services) to a serviced communication equipment CEj at an instant time frame through its OFDMA frames (in case of a WiMAX network) and over a predefined time frame through "statistical" frames. These frames are usually decomposed in bursts that gather service flows associated to different communication equipment CEj.

The invention may also propose a communication equipment - centered base station service distribution map based on the above frames and decomposed in communication equipment service distribution maps (CE-SDM), in both uplink (UL) and downlink (DL). Each CE-SDM describes a set of service attributes for the set of service flows which is associated to a communication equipment CEj. The set of service attributes may include attributes such as the current modulation for the communication equipment CEj, the proportion of traffic per data delivery service class and uplink scheduling class, the resources allocated per data delivery class and uplink scheduling class, the required and actually provided jitter, and latency.

A CE-SDM allows to infer two decision elements that serve two handover management functions:
- the QoS rate experienced by a communication equipment CEj and which is expressed in "granted" QoS with respect to the predefined required QoS for the set of service flows. This QoS rate can be compared to an admissibility threshold, for instance compliant to the WiMAX Forum requirements, and can be used to trigger a handover in the QoS triggering mode,
- the suitability of a communication equipment CEj to have its flows handed over to another base station BSi' for load balancing purposes, for instance to define the proportion of traffic in "best effort" data delivery service. This information can be used to select a target communication equipment CEj' in the load balancing triggering mode.

The above mentioned data delivery services include best effort (BE), UGS ("Unsolicited Granted Service"), real time variable rate (rt-VR), extended real time variable rate (ert-VR) and non real time variable rate (nrt-VR).

The above mentioned uplink scheduling services include best effort, UGS, rt-PS (real time - Polling Service), nrt-PS (non real time - Polling Service) and ert-PS (extended real time - Polling Service).

The time interval associated to a CE-SDM should be preferably the same as the one used by functions such as RRM ("Radio Resource Management" defined in the WiMAX forum), CAC and scanning (performed by the communication equipments CEj).

A device Di according to the invention is preferably made of software modules, but it may be also made of electronic circuit(s) or hardware modules, or a combination of hardware and software modules.

The invention can also be considered in terms of a method for managing handovers (HOs) in a broadband wireless access network AN.

Such a method may be implemented by means of a device Di (or D) such as the one above described with reference to the unique figure. Therefore, only its main characteristics will be mentioned hereafter.

The method according to the invention consists, each time one receives, from either a base station BSi or a communication equipment CEj that is connected to this base station BSi, an alarm message signalling either i) a degradation of at least one decision metric, representative either of the quality of a signal transmitted between this connected communication equipment CEj and this base station BSi or of a quality of service offered by this base station BSi to this connected communication equipment CEj, or ii) an overload of this base station BSi, in triggering a handover assisted either by this connected communication equipment CEj and possibly this base station BSi and involving a target base station BSi' to be selected, or by a selected target communication equipment CEj' and this base station BSi and involving a target base station BSi' to be selected.

The invention offers several advantages compared with the prior art handover managers, and notably:
- it defines specific handover triggering cases and associates a specific handover management protocol to each of these cases,
- it defines and uses particular information on the data delivery service associated to the flows of a connected communication equipment,
- it allows to take into consideration not only the mobile communication equipments but any wireless terminal provided with handover capabilities,
- it allows to locate the communication equipments in overlapping zones in a WiMAX network, without any need of scanning.

The invention is not limited to the embodiments of handover management device, base station and handover management method described above, only as examples, but it encompasses all alternative embodiments which may be considered by one skilled in the art within the scope of the claims hereafter.

## Claims

1. Handover management device (Di), for a broadband wireless access network (AN) comprising a plurality of base stations (BSi) to which communication equipments (CEj) may be connected, **characterized in that** it is arranged, when it receives, from either a base station (BSi) or a communication equipment (CEj) that is connected to said base station (BSi), an alarm message signalling either i) a degradation of at least one decision metric, representative either of the quality of a signal transmitted between said connected communication equipment (CEj) and said base station (BSi) or of a quality of service offered by said base station (BSi) to said connected communication equipment (CEj), or ii) an overload of said base station (BSi), for triggering a handover assisted either by said connected communication equipment (CEj) and possibly said base station (BSi) and involving a target base station (BSi') to be selected, or by a selected target communication equipment (CEj') and said base station (BSi) and involving a target base station (BSi') to be selected.

2. Handover management device according to claim 1, wherein each decision metric is chosen in a metric group comprising at least one of the channel to interference noise ratio (CINR), the received signal strength indicator (RSSI), the quality of service ratio that is provided to service flow(s) attached to a connected communication equipment (CEj), the base station load and the available bandwidth.

3. Handover management device according to one of claims 1 and 2, wherein it is arranged, when it receives an alarm message signalling a degradation of at least one decision metric from said base station (BSi) or said connected communication equipment (CEj), to generate a response message comprising a filtered list of at least one base station (BSi) selected according to at least one constraint on at least one metric, and to transmit said response message to said connected communication equipment (CEj) that is concerned by said received alarm message so that it selects at least one target base station (BSi') into said filtered list according to at least one selection criterion.

4. Handover management device according to one of claims 1 to 6, wherein it is arranged, when it receives an alarm message signalling an overload from said base station (BSi), to select said target communication equipment (CEj') among an equipment group of communication equipments (CEj) that are located in base station coverage zones that are overlapping each other, and to transmit a message comprising a filtered list of at least one base station (BSi'), selected according to at least one constraint on at least one metric, to this target communication equipment (CEj') so that it selects at least one target base station into this filtered list according to at least one selection criterion.

5. Handover management device according to claim 4, wherein said equipment group comprises communication equipments (CEj) that are moving or not and that are capable of getting appropriate functions to allow them to be handed over.

6. Handover management device according to one of claims 3 to 5, wherein it is arranged to get a filtered list of selected base station(s) (BSi) from the base station (BSi) that has sent the received alarm message or that is connected to the communication equipment (CEj) that has generated the received alarm message.

7. Handover management device according to one of claims 3 to 6, wherein at least one of said selection criteria is weighted by an associated weight.

8. Handover management device according to one of claims 3 to 7, wherein each selection criterion and/or selection constraint concerns a selection metric chosen in a metric group comprising at least one of the channel to interference noise ratio (CINR), the received signal strength indicator (RSSI), the quality of service ratio that is provided to service flow(s) attached to a communication equipment (CEj), the base station load and the available bandwidth.

9. Base station (BSi) for a broadband wireless access network (AN) comprising a plurality of base stations (BSi) to which communication equipments (CEj) may be connected, **characterized in that** it comprises a handover management device (Di) according to one of claims 1 to 8.

10. Handover management method, for a broadband wireless access network (AN) comprising a plurality of base stations (BSi) to which communication equipments (CEj) may be connected to, **characterized in that** it consists, upon reception, from either a base station (BSi) or a communication equipment (CEj) that is connected to said base station (BSi), of an alarm message signalling either i) a degradation of at least one decision metric, representative either of the quality of a signal transmitted between said connected communication equipment (CEj) and said base station (BSi) or of a quality of service offered by said base station (BSi) to said connected communication equipment (CEj), or ii) an overload of said base station (BSi), in triggering a handover assisted either by said connected communication equipment (CEj) and possibly said base station (BSi) and involving a target base station (BSi') to be selected, or by a selected target communication equipment (CEj') and said base station (BSi) and involving a target base station (BSi') to be selected.

11. Handover management method according to claim 10, wherein each decision metric is chosen in a metric group comprising at least one of the channel to interference noise ratio (CINR), the received signal strength indicator (RSSI), the quality of service ratio that is provided to service flow(s) attached to a communication equipment (CEj), the base station load and the available bandwidth.

12. Handover management method according to one of claims 10 and 11, wherein, upon reception of an alarm message signalling a degradation of at least one decision metric from said base station (BSi) or said connected communication equipment (CEj), one generates a response message comprising a filtered list of at least one base station (BSi) selected according to at least one constraint on at least one metric, and one transmits said response message to said connected communication equipment (CEj) that is concerned by said received alarm message so that it selects at least one target base station (BSi') into said filtered list according to at least one selection criterion.

13. Handover management method according to one of claims 10 to 12, wherein, when one receives an alarm message signalling an overload from said base station (BSi), one selects said target communication equipment (CEj') among an equipment group of communication equipments (CEj) that are located in base station coverage zones that are overlapping each other, and one transmits a message comprising a filtered list of at least one base station (BSi'), selected according to at least one constraint on at least one metric, to this target communication equipment (CEj') so that it selects at least one target base station into this filtered list according to at least one selection criterion.

14. Handover management method according to claim 13, wherein said equipment group comprises communication equipments (CEj) are moving or not and that are capable of getting appropriate functions to allow them to be handed over.

15. Handover management method according to one of claims 12 to 14, wherein one gets a filtered list of selected base stations (BSi) from the base station (BSi) that has sent the received alarm message or that is connected to the communication equipment (CEj) that has generated the received alarm message.

16. Handover management method according to claim 15, wherein said filtered list is determined by said base station (BSi) before the reception of the alarm message.

17. Handover management method according to one of claims 12 to 16, wherein at least one of said selection criteria is weighted by an associated weight.

18. Handover management method according to one of claims 12 to 17, wherein each selection criterion and/or selection constraint concerns a selection metric chosen from a metric group comprising at least one of the channel to interference noise ratio (CINR), the received signal strength indicator (RSSI), the quality of service ratio that is provided to service flow(s) attached to a communication equipment (CEj), the base station load and the available bandwidth.
